# EUROPEAN PATENT APPLICATION

(11) **EP 4 726 464 A1**
(43) Date of publication of application: **15.04.2026**
(21) Application number: 24835162.9
(22) Date of filing: 27.05.2024
(51) Int. Cl.: G02F 1/03, H04B 10/079

(54) **SIGNAL MONITORING METHOD AND APPARATUS APPLIED TO ELECTRO-OPTIC MODULATOR, AND ELECTRONIC DEVICE**

(30) Priority: 06.07.2023 CN 202310828613
(71) Applicant: Nanjing Lycore Technologies Co., Ltd., Nanjing, Jiangsu 210000 (CN)
(72) Inventor: LIANG, Hanxiao, Nanjing, Jiangsu 210000 (CN); SONG, Yipin, Nanjing, Jiangsu 210000 (CN); ZHOU, Yingcong, Nanjing, Jiangsu 210000 (CN); WU, Haicang, Nanjing, Jiangsu 210000 (CN); MAO, Wenhao, Nanjing, Jiangsu 210000 (CN); SONG, Shiwei, Nanjing, Jiangsu 210000 (CN); SUN, Weiqi, Nanjing, Jiangsu 210000 (CN); YU, Qingyang, Nanjing, Jiangsu 210000 (CN)
(74) Representative: Reddie & Grose LLP
(86) International application number: PCT/CN2024/095463
(87) International publication number: WO 2025/007679

(57) **Abstract**

The present disclosure provides a signal monitoring method and apparatus applied to an electro-optic modulator, an electronic device, a computer-readable storage medium, and a computer program product. The signal monitoring method includes: inputting a modulation voltage signal into a modulation circuit of the electro-optic modulator, the modulation voltage signal being obtained by superimposing a carrier voltage signal and a pulse voltage signal, where an amplitude of the carrier voltage signal is greater than a half-wave voltage Vpi of the electro-optic modulator, and an amplitude of the pulse voltage signal is less than a peak-to-peak value Vpp of the carrier voltage signal; obtaining a photoelectric conversion detection signal corresponding to an output optical signal of the electro-optic modulator; and monitoring the presence of the pulse voltage signal in the modulation voltage signal based on the photoelectric conversion detection signal.

## Description

### CROSS-REFERENCE TO RELATED APPLICATION

The present disclosure claims priority to Chinese Patent Application No. 2023108286133, filed on July 6, 2023, which is incorporated herein by reference in its entirety.

### TECHNICAL FIELD

The present disclosure relates to the technical field of optical communications, and in particular, to a signal monitoring method and apparatus applied to an electro-optic modulator, an electronic device, a computer-readable storage medium, and a computer program product.

### BACKGROUND ART

In recent years, with rapid development of emerging network application services such as Internet of Things, driverless, telemedicine, and distance education, higher requirements have been put forward for high-speed and large-capacity communication technology. Optical communications have achieved rapid development in the direction of high-speed and large-capacity communications due to their characteristics such as a large bandwidth, high reliability, a low cost and a strong anti-interference ability. How to load high-speed electrical signals onto optical carriers is a core research content.

An electro-optic modulator is a modulator that is made based on an electro-optic effect of electro-optic materials. The electro-optic effect means that when a voltage is applied to an electro-optic material such as a lithium niobate crystal, a gallium arsenide crystal, or a lithium tantalate crystal, a refractive index of the electro-optic material will vary, resulting in a change in characteristics of light waves passing through the electro-optic material. The use of the electro-optic effect allows modulation of parameters, such as the phase, amplitude, intensity and polarization state, of optical signals.

With increasingly urgent requirements for the high-speed and large-capacity communication technology, higher requirements have been put forward for monitoring of an operating signal of the electro-optic modulator.

### SUMMARY OF THE INVENTION

Embodiments of the present disclosure provide a signal monitoring method and apparatus applied to an electro-optic modulator, an electronic device, a computer-readable storage medium, and a computer program product, so as to implement effective and simplified monitoring of an operating signal of the electro-optic modulator.

According to an aspect of the present disclosure, there is provided a signal monitoring method applied to an electro-optic modulator. The method includes:
inputting a modulation voltage signal into a modulation circuit of the electro-optic modulator, the modulation voltage signal being obtained by superimposing a carrier voltage signal and a pulse voltage signal, where an amplitude of the carrier voltage signal is greater than a half-wave voltage Vpi of the electro-optic modulator, and an amplitude of the pulse voltage signal is less than a peak-to-peak value Vpp of the carrier voltage signal;
obtaining a photoelectric conversion detection signal corresponding to an output optical signal of the electro-optic modulator; and
monitoring the presence of the pulse voltage signal in the modulation voltage signal based on the photoelectric conversion detection signal.

According to an aspect of the present disclosure, there is provided a signal monitoring apparatus applied to an electro-optic modulator. The apparatus includes:
an input unit configured to input a modulation voltage signal into a modulation circuit of the electro-optic modulator, the modulation voltage signal being obtained by superimposing a carrier voltage signal and a pulse voltage signal, where an amplitude of the carrier voltage signal is greater than a half-wave voltage Vpi of the electro-optic modulator, and an amplitude of the pulse voltage signal is less than a peak-to-peak value Vpp of the carrier voltage signal;
an obtaining unit configured to obtain a photoelectric conversion detection signal corresponding to an output optical signal of the electro-optic modulator; and
a monitoring unit configured to monitor the presence of the pulse voltage signal in the modulation voltage signal based on the photoelectric conversion detection signal.

According to an aspect of the present disclosure, there is provided an electronic device, including: at least one processor; and a memory communicatively connected to the at least one processor, where the memory stores instructions executable by the at least one processor, and when executed by the at least one processor, the instructions cause the at least one processor to perform the signal monitoring method as described in the forgoing aspect.

According to an aspect of the present disclosure, there is provided a computer-readable storage medium storing computer instructions, where the computer instructions are configured to cause a computer to perform the signal monitoring method as described in the forgoing aspect.

According to an aspect of the present disclosure, there is provided a computer program product including a computer program, where when the computer program is executed by a processor, the signal monitoring method as described in the forgoing aspect is implemented.

According to one or more embodiments of the present disclosure, an operating signal of the electro-optic modulator can be effectively monitored. Moreover, there is no need to additionally provide a bias voltage modulation circuit and a related signal input, which allows for simplified monitoring logic and implementation, thus reducing development costs.

It should be understood that the content described in this section is not intended to identify critical or important features of the embodiments of the present disclosure, and is not used to limit the scope of the present disclosure. Other features of the present disclosure will be readily understood with reference to the following description.

### BRIEF DESCRIPTION OF THE DRAWINGS

More details, features, and advantages of the present disclosure are disclosed in the following description of exemplary embodiments with reference to the accompanying drawings, in which:
FIG. 1 is a schematic diagram of a structure of a conventional Mach-Zehnder modulator;
FIG. 2 is a schematic diagram of a structure of an electro-optic modulator according to some embodiments of the present disclosure;
FIG. 3 is a schematic flowchart of a signal monitoring method applied to an electro-optic modulator according to some embodiments of the present disclosure;
FIG. 4 is a schematic diagram of each of a pulse voltage signal, a carrier voltage signal, a modulation voltage signal, and a photoelectric conversion detection signal according to some embodiments of the present disclosure; and
FIG. 5 is a block diagram of a structure of a signal monitoring apparatus applied to an electro-optic modulator according to some embodiments of the present disclosure.

### DETAILED DESCRIPTION OF EMBODIMENTS

Exemplary embodiments of the present disclosure are described below in conjunction with the accompanying drawings, where various details of the embodiments of the present disclosure are included to facilitate understanding, and should only be considered as exemplary. Therefore, those of ordinary skill in the art should be aware that various changes and modifications can be made to the embodiments described here, without departing from the scope of the present disclosure. Likewise, for clarity and conciseness, the description of well-known functions and structures is omitted in the following description.

In the present disclosure, unless otherwise stated, the terms "first", "second", etc., used to describe various elements are not intended to limit the positional, temporal or importance relationship of these elements, but rather only to distinguish one element from the other. In some examples, a first element and a second element may refer to a same instance of the element, and in some cases, based on contextual descriptions, the first element and the second element may also refer to different instances.

The terms used in the description of the various examples in the present disclosure are merely for the purpose of describing particular examples, and are not intended to be limiting. If the number of elements is not specifically defined, there may be one or more elements, unless otherwise expressly indicated in the context. Moreover, the term "and/or" used in the present disclosure encompasses any of and all possible combinations of listed terms.

A Mach-Zehnder modulator is one type of electro-optic modulator, in which an input optical signal is equally split into two branch optical signals, which then enter two waveguide arms, respectively. The two waveguide arms are each made of an electro-optic material and have a refractive index changing with an applied modulation voltage. The change in the refractive index of the waveguide arms may lead to a change in phases of the branch optical signals. Therefore, an output from the convergence of the two branch optical signals is an interference signal with an intensity changing with the modulation voltage. In brief, the Mach-Zehnder modulator can implement modulation of different sidebands by controlling the modulation voltage applied to the two waveguide arms. As a device for converting electrical signals into optical signals, the Mach-Zehnder modulator is one of the common core devices in optical interconnection, optical computing and optical communication systems.

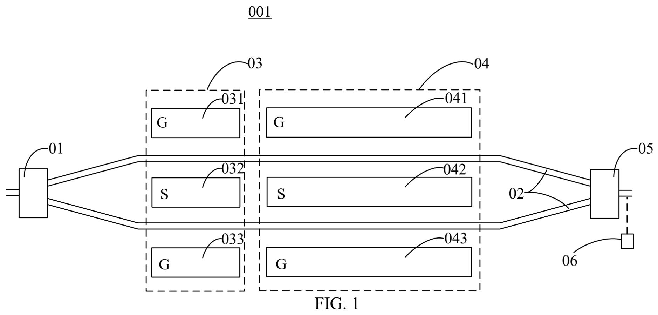

FIG. 1 shows a schematic structural diagram of a conventional Mach-Zehnder modulator. Ideally, the Mach-Zehnder modulator 001 has two waveguide arms 02 that are identical to each other. When the Mach-Zehnder modulator 001 is not operating, neither of the two waveguide arms 02 undergoes an electro-optic effect. Input light passes through a light splitting element 01 and is then equally split into two branch optical signals. The two branch optical signals are still in the same phase after the two branch optical signals respectively pass through one waveguide arm 02, and then a coherently enhanced signal for the two branch optical signals will be output from a light combining element 05. When the Mach-Zehnder modulator 001 is operating, a radio frequency modulation circuit 04 (for example, including a radio frequency signal electrode 042, a first ground electrode 041, and a second ground electrode 042) applies a modulation voltage to the two waveguide arms 02, and the two branch optical signals may differ in phase by an odd or even multiple of Π after the two branch optical signals respectively pass through one waveguide arm 02. When the two branch optical signals differ in phase by an even multiple of Π, the light combining element 05 outputs a coherently enhanced signal for the two branch optical signals. When the two branch optical signals differ in phase by an odd multiple of Π, the light combining element 05 outputs a coherent cancellation signal for the two branch optical signals.

However, in practice, the two waveguide arms 02 cannot be identical absolutely due to reasons such as a material and electric charge accumulation; when the Mach-Zehnder modulator 001 is not operating, a certain phase deviation has appeared after the two branch optical signals respectively pass through one waveguide arm 02, this phase deviation is inevitable, is an inherent phase difference and may vary with changes in time and environmental conditions, and the existence of this phase deviation affects the accuracy of output signals when the Mach-Zehnder modulator 001 is operating, or even causes the Mach-Zehnder modulator 001 to be incapable of performing normal output.

Therefore, as shown in FIG. 1, generally, a bias voltage modulation circuit 03 (for example, including a bias voltage signal electrode 032, a third ground electrode 031, and a fourth ground electrode 033) is further required to perform bias voltage modulation on the two waveguide arms 02, so as to compensate for the phase deviation caused by the inherent difference between the two waveguide arms 02.

For a Mach-Zehnder modulator, if it has an operating point (referring to a light output point under the control of an electrical signal, a parameter of which electrical signal is usually adjusted to achieve a suitable operating point ) that is not at a midpoint between the highest light passing power and the lowest light passing power, its electro-optic conversion efficiency will be low; and if it has an operating point that is at the highest light passing power or the lowest light passing power, its electro-optic conversion efficiency will be zero.

Therefore, in the related art, as shown in FIG. 1, a photoelectric sensor 06 is generally used to monitor an output optical signal of the Mach-Zehnder modulator 001, and then adjust a bias voltage signal output to the bias voltage modulation circuit 03 based on feedback of monitoring information, so as to achieve accurate bias voltage modulation. However, this monitoring method complicates a system and leads to increased system costs.

Embodiments of the present disclosure provide a signal monitoring method and apparatus applied to an electro-optic modulator, an electronic device, a computer-readable storage medium, and a computer program product, so as to implement effective and simplified monitoring of an operating signal of the electro-optic modulator.

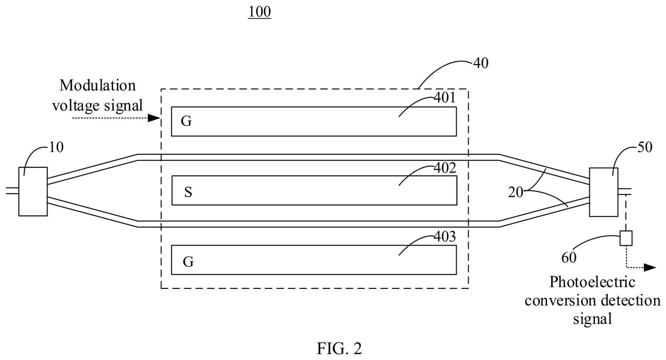

Reference may be made to FIG. 2 for a structure of the electro-optic modulator, which includes a light splitting element 10, a light combining element 50, two waveguide arms 20, a modulation circuit 40, and a photoelectric sensor 60.

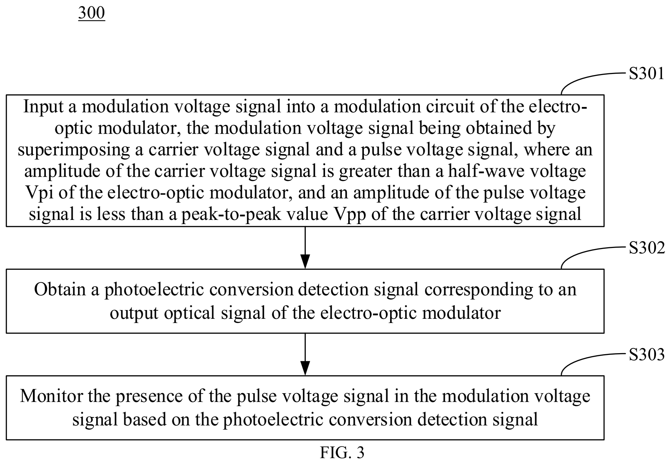

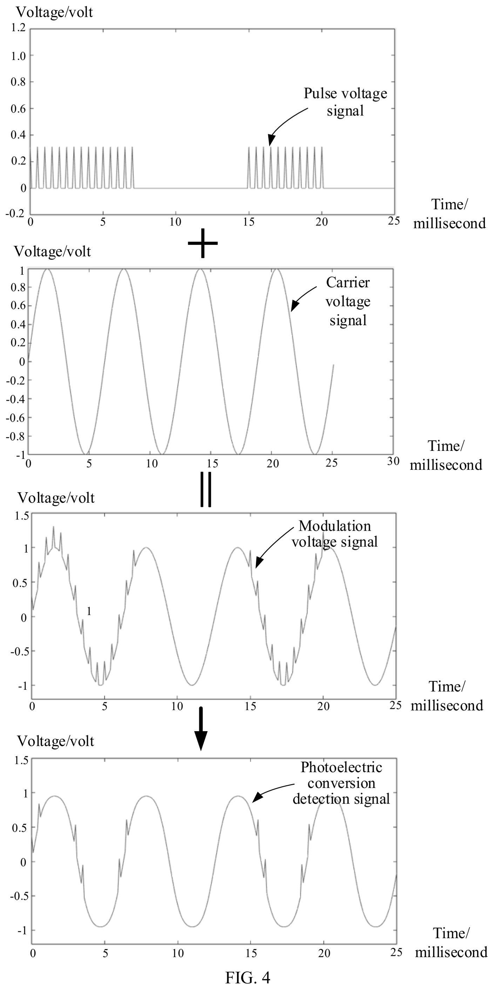

As shown in FIG. 3 and FIG. 4, a signal monitoring method 300 applied to an electro-optic modulator according to some embodiments of the present disclosure includes the following steps S301 to S303.

In step S301, a modulation voltage signal is input into a modulation circuit of the electro-optic modulator, the modulation voltage signal being obtained by superimposing a carrier voltage signal and a pulse voltage signal, where an amplitude of the carrier voltage signal is greater than a half-wave voltage Vpi of the electro-optic modulator, and an amplitude of the pulse voltage signal is less than a peak-to-peak value Vpp of the carrier voltage signal.

An adjustment circuit includes several electrodes (such as a first ground electrode 401, a signal electrode 402, and a second ground electrode 403 as shown in FIG. 2), the specific arrangement form of which is not limited. For example, the arrangement form of GSG, GSGSG, etc. may be employed, where G represents a ground electrode, and S represents a signal electrode and is configured to receive a modulation voltage signal.

The carrier voltage signal functions as a bias voltage signal, the amplitude of which should be greater than the half-wave voltage Vpi of the electro-optic modulator, where the half-wave voltage of the electro-optic modulator is a voltage value required for the electro-optic modulator to cause a half-wave phase change in the output signal. The carrier voltage signal is a signal with a continuously changing voltage. For example, a sine wave voltage signal or a triangle wave voltage signal may be used.

The amplitude of the pulse voltage signal is less than the peak-to-peak value Vpp of the carrier voltage signal, so that the carrier voltage signal can be superimposed with the pulse voltage signal to obtain the modulation voltage signal with characteristics of a carrier wave and a small pulse.

The modulation voltage signal is input to the modulation circuit, and the carrier voltage signal therein is equivalent to the bias voltage signal. A voltage of the carrier voltage signal is continuously changing, which is equivalent to the fact that a bias voltage of the operating point of the electro-optic modulator is always changing.

In step S302, a photoelectric conversion detection signal corresponding to an output optical signal of the electro-optic modulator is obtained. The photoelectric conversion detection signal corresponding to the output optical signal may be obtained by a photoelectric sensor by detecting the output optical signal.

In step S303, the presence of the pulse voltage signal in the modulation voltage signal is monitored based on the photoelectric conversion detection signal.

Due to a relatively small and weak amplitude of the pulse voltage signal, it is not possible to accurately monitor, at an input side, whether the pulse voltage signal is actually present in the modulation voltage signal input into the modulation circuit. In the embodiment of the present disclosure, the photoelectric sensor is used to monitor the output optical signal of the electro-optic modulator, to obtain the photoelectric conversion detection signal. Since the photoelectric conversion detection signal has a cycle and an amplitude that are significantly greater than those of the modulation voltage signal, it is possible to accurately monitor the presence of the pulse voltage signal in the modulation voltage signal.

As shown in FIG. 4, within the cycle of the photoelectric conversion detection signal, the pulse voltage signal gets a response at some periods of time and does not get a response at other periods of time, which means that regardless of a position of the operating point of the electro-optic modulator, the pulse voltage signal can always get a sufficient response in each cycle, so that it is possible to monitor the presence of the pulse voltage signal in the modulation voltage signal. Therefore, with the signal monitoring method of the present disclosure, an operating signal of the electro-optic modulator can be effectively monitored. Moreover, there is no need to additionally provide a bias voltage modulation circuit and a related signal input, which allows for simplified monitoring logic and implementation, thus reducing development costs.

In some embodiments of the present disclosure, step S303 may specifically include:
in response to determining that the photoelectric conversion detection signal contains a first characteristic signal corresponding to the carrier voltage signal and a second characteristic signal corresponding to the pulse voltage signal, determining that the pulse voltage signal is present in the modulation voltage signal; and
in response to determining that the photoelectric conversion detection signal contains the first characteristic signal corresponding to the carrier voltage signal and does not contain the second characteristic signal corresponding to the pulse voltage signal, determining that the pulse voltage signal is absent in the modulation voltage signal.

Since the pulse voltage signal may get a sufficient response in each cycle, it is possible to monitor the presence of the pulse voltage signal in the modulation voltage signal based on the above logic.

In some embodiments of the present disclosure, the signal monitoring method further includes: determining the amplitude of the pulse voltage signal based on the photoelectric conversion detection signal.

In this embodiment, the amplitude parameter of the pulse voltage signal may be determined based on the photoelectric conversion detection signal.

In the photoelectric sensor, Vpi = V1/N, and then V2 = V1 * (V2'/ (N * V1')) = Vpi * (V2'/ V1'). Therefore, the amplitude of the pulse voltage signal may be determined based on a functional relation V2 = Vpi * (V2'/ V1'), where V1 is the amplitude of the carrier voltage signal, V2 is the amplitude of the pulse voltage signal, Vpi is the half-wave voltage of the electro-optic modulator, V1' is an amplitude of the first characteristic signal in the photoelectric conversion detection signal, and V2' is an amplitude of the second characteristic signal in the photoelectric conversion detection signal.

In this embodiment, the amplitude of the pulse voltage signal can be obtained, so that the modulation voltage signal input into the modulation circuit of the electro-optic modulator can be analyzed and adjusted.

In some embodiments of the present disclosure, the electro-optic modulator is a Mach-Zehnder electro-optic modulator, and have two waveguide arms that may or may not be equal in length. For example, in some embodiments, the electro-optic modulator may be a non-equal-arm Mach-Zehnder electro-optic modulator.

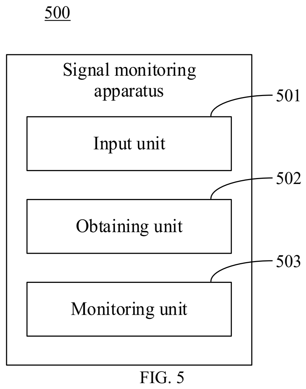

Based on the same inventive concept, as shown in FIG. 5, an embodiment of the present disclosure further provides a signal monitoring apparatus 500 applied to an electro-optic modulator. The apparatus includes:
an input unit 501 configured to input a modulation voltage signal into a modulation circuit of the electro-optic modulator, the modulation voltage signal being obtained by superimposing a carrier voltage signal and a pulse voltage signal, where an amplitude of the carrier voltage signal is greater than a half-wave voltage Vpi of the electro-optic modulator, and an amplitude of the pulse voltage signal is less than a peak-to-peak value Vpp of the carrier voltage signal;
an obtaining unit 502 configured to obtain a photoelectric conversion detection signal corresponding to an output optical signal of the electro-optic modulator; and
a monitoring unit 503 configured to monitor the presence of the pulse voltage signal in the modulation voltage signal based on the photoelectric conversion detection signal.

In some embodiments, the monitoring unit 503 is configured to: in response to determining that the photoelectric conversion detection signal contains a first characteristic signal corresponding to the carrier voltage signal and a second characteristic signal corresponding to the pulse voltage signal, determine that the pulse voltage signal is present in the modulation voltage signal; and in response to determining that the photoelectric conversion detection signal contains the first characteristic signal corresponding to the carrier voltage signal and does not contain the second characteristic signal corresponding to the pulse voltage signal, determine that the pulse voltage signal is absent in the modulation voltage signal.

In some embodiments, the signal monitoring apparatus 500 further includes a determination unit (not shown in the figure) configured to determine the amplitude of the pulse voltage signal based on the photoelectric conversion detection signal.

In some embodiments, the determination unit is configured to determine the amplitude of the pulse voltage signal based on a functional relation V2 = Vpi * (V2'/ V1'), where V2 is the amplitude of the pulse voltage signal, Vpi is the half-wave voltage of the electro-optic modulator, V1' is an amplitude of the first characteristic signal, and V2' is an amplitude of the second characteristic signal.

With the signal monitoring apparatus 500 of the present disclosure, an operating signal of the electro-optic modulator can be effectively monitored. Moreover, there is no need to additionally provide a bias voltage modulation circuit and a related signal input, which allows for simplified monitoring logic and implementation, thus reducing development costs.

According to an embodiment of the present disclosure, there is further provided an electronic device, including: at least one processor; and a memory communicatively connected to the at least one processor, where the memory stores instructions executable by the at least one processor, and when executed by the at least one processor, the instructions cause the at least one processor to perform the signal monitoring method described in the forgoing embodiment.

The electronic device can cooperate with a photoelectric sensor to effectively monitor an operating signal of the electro-optic modulator. Moreover, there is no need to additionally provide a bias voltage modulation circuit and a related signal input, which allows for simplified monitoring logic and implementation, thus reducing development costs.

An embodiment of the present disclosure further provides a computer-readable storage medium storing computer instructions, where the computer instructions are configured to cause a computer to perform the steps of the method described in any one of the foregoing embodiments.

In addition, an embodiment of the present disclosure further provides a computer program product, including a computer program, where when the computer program is executed by a processor, the steps of the method described in any one of the foregoing embodiments are implemented.

Various implementations of the systems and technologies described herein above can be implemented in a digital electronic circuit system, an integrated circuit system, a field programmable gate array (FPGA), an application-specific integrated circuit (ASIC), an application-specific standard product (ASSP), a system-on-chip (SOC) system, a complex programmable logical device (CPLD), computer hardware, firmware, software, and/or a combination thereof. These various implementations may include: implementation in one or more computer programs, where the one or more computer programs may be executed and/or interpreted on a programmable system including at least one programmable processor. The programmable processor may be a dedicated or general-purpose programmable processor that can receive data and instructions from a storage system, at least one input apparatus, and at least one output apparatus, and transmit data and instructions to the storage system, the at least one input apparatus, and the at least one output apparatus.

Program codes used to implement the method of the present disclosure can be written in any combination of one or more programming languages. These program codes may be provided for a processor or a controller of a general-purpose computer, a special-purpose computer, or other programmable data processing apparatuses, such that when the program codes are executed by the processor or the controller, the functions/operations specified in the flowcharts and/or block diagrams are implemented. The program codes may be completely executed on a machine, or partially executed on a machine, or may be, as an independent software package, partially executed on a machine and partially executed on a remote machine, or completely executed on a remote machine or a server.

In the context of the present disclosure, the machine-readable medium may be a tangible medium, which may contain or store a program for use by an instruction execution system, apparatus, or device, or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

In order to provide interaction with a user, the systems and technologies described herein can be implemented on a computer which has: a display apparatus (for example, a cathode-ray tube (CRT) or a liquid crystal display (LCD) monitor) configured to display information to the user; and a keyboard and a pointing apparatus (for example, a mouse or a trackball) through which the user can provide an input to the computer. Other categories of apparatuses can also be used to provide interaction with the user; for example, feedback provided to the user can be any form of sensory feedback (for example, visual feedback, auditory feedback, or tactile feedback), and an input from the user can be received in any form (including an acoustic input, a voice input, or a tactile input).

The systems and technologies described herein can be implemented in a computing system (for example, as a data server) including a backend component, or a computing system (for example, an application server) including a middleware component, or a computing system (for example, a user computer with a graphical user interface or a web browser through which the user can interact with the implementation of the systems and technologies described herein) including a frontend component, or a computing system including any combination of the backend component, the middleware component, or the frontend component. The components of the system can be connected to each other through digital data communication (for example, a communication network) in any form or medium. Examples of the communication network include: a local area network (LAN), a wide area network (WAN), and the Internet.

A computer system may include a client and a server. The client and the server are generally far away from each other and usually interact through a communication network. A relationship between the client and the server is generated by computer programs running on respective computers and having a client-server relationship with each other. The server may be a cloud server, a server in a distributed system, or a server combined with a blockchain.

It should be understood that steps may be reordered, added, or deleted based on the various forms of procedures shown above. For example, the steps recorded in the present disclosure may be performed in parallel, in order, or in a different order, provided that the desired result of the technical solutions disclosed in the present disclosure can be achieved, which is not limited herein.

Although the embodiments or examples of the present disclosure have been described with reference to the accompanying drawings, it should be appreciated that the method, apparatus, and device described above are merely exemplary embodiments or examples, and the scope of the present invention is not limited by the embodiments or examples, but defined only by the granted claims and the equivalent scope thereof. Various elements in the embodiments or examples may be omitted or substituted by equivalent elements thereof. Moreover, the steps may be performed in an order different from that described in the present disclosure. Further, various elements in the embodiments or examples may be combined in various ways. It is important that, as the technology evolves, many elements described herein may be replaced with equivalent elements that appear after the present disclosure.

## Claims

1. A signal monitoring method applied to an electro-optic modulator, the method comprising:
inputting a modulation voltage signal into a modulation circuit of the electro-optic modulator, the modulation voltage signal being obtained by superimposing a carrier voltage signal and a pulse voltage signal, wherein an amplitude of the carrier voltage signal is greater than a half-wave voltage Vpi of the electro-optic modulator, and an amplitude of the pulse voltage signal is less than a peak-to-peak value Vpp of the carrier voltage signal;
obtaining a photoelectric conversion detection signal corresponding to an output optical signal of the electro-optic modulator; and
monitoring the presence of the pulse voltage signal in the modulation voltage signal based on the photoelectric conversion detection signal.

2. The signal monitoring method according to claim 1, wherein the monitoring the presence of the pulse voltage signal in the modulation voltage signal based on the photoelectric conversion detection signal comprises:
in response to determining that the photoelectric conversion detection signal contains a first characteristic signal corresponding to the carrier voltage signal and a second characteristic signal corresponding to the pulse voltage signal, determining that the pulse voltage signal is present in the modulation voltage signal; and
in response to determining that the photoelectric conversion detection signal contains the first characteristic signal corresponding to the carrier voltage signal and does not contain the second characteristic signal corresponding to the pulse voltage signal, determining that the pulse voltage signal is absent in the modulation voltage signal.

3. The signal monitoring method according to claim 2, further comprising:
determining the amplitude of the pulse voltage signal based on the photoelectric conversion detection signal.

4. The signal monitoring method according to claim 3, wherein the determining the amplitude of the pulse voltage signal based on the photoelectric conversion detection signal comprises:
determining the amplitude of the pulse voltage signal based on a functional relation V2 = Vpi * (V2'/ V1'), wherein V2 is the amplitude of the pulse voltage signal, Vpi is the half-wave voltage of the electro-optic modulator, V1' is an amplitude of the first characteristic signal, and V2' is an amplitude of the second characteristic signal.

5. The signal monitoring method according to any one of claims 1 to 4, wherein
the carrier voltage signal is a sine wave voltage signal or a triangle wave voltage signal.

6. A signal monitoring apparatus applied to an electro-optic modulator, the apparatus comprising:
an input unit configured to input a modulation voltage signal into a modulation circuit of the electro-optic modulator, the modulation voltage signal being obtained by superimposing a carrier voltage signal and a pulse voltage signal, wherein an amplitude of the carrier voltage signal is greater than a half-wave voltage Vpi of the electro-optic modulator, and an amplitude of the pulse voltage signal is less than a peak-to-peak value Vpp of the carrier voltage signal;
an obtaining unit configured to obtain a photoelectric conversion detection signal corresponding to an output optical signal of the electro-optic modulator; and
a monitoring unit configured to monitor the presence of the pulse voltage signal in the modulation voltage signal based on the photoelectric conversion detection signal.

7. The signal monitoring apparatus according to claim 6, wherein
the monitoring unit is configured to: in response to determining that the photoelectric conversion detection signal contains a first characteristic signal corresponding to the carrier voltage signal and a second characteristic signal corresponding to the pulse voltage signal, determine that the pulse voltage signal is present in the modulation voltage signal; and
in response to determining that the photoelectric conversion detection signal contains the first characteristic signal corresponding to the carrier voltage signal and does not contain the second characteristic signal corresponding to the pulse voltage signal, determine that the pulse voltage signal is absent in the modulation voltage signal.

8. The signal monitoring apparatus according to claim 7, further comprising:
a determination unit configured to determine the amplitude of the pulse voltage signal based on the photoelectric conversion detection signal.

9. The signal monitoring apparatus according to claim 8, wherein
the determination unit is configured to determine the amplitude of the pulse voltage signal based on a functional relation V2 = Vpi * (V2'/ V1'), wherein V2 is the amplitude of the pulse voltage signal, Vpi is the half-wave voltage of the electro-optic modulator, V1' is an amplitude of the first characteristic signal, and V2' is an amplitude of the second characteristic signal.

10. An electronic device, comprising:
at least one processor; and
a memory communicatively connected to the at least one processor, wherein
the memory stores instructions executable by the at least one processor, and when executed by the at least one processor, the instructions cause the at least one processor to perform the signal monitoring method according to any one of claims 1 to 5.

11. A computer-readable storage medium storing computer instructions, wherein the computer instructions are configured to cause a computer to perform the signal monitoring method according to any one of claims 1 to 5.

12. A computer program product, comprising a computer program, wherein when the computer program is executed by a processor, the signal monitoring method according to any one of claims 1 to 5 is implemented.
